# EUROPEAN PATENT APPLICATION

(11) **EP 2 355 001 A2**
(43) Date of publication of application: **10.08.2011**
(21) Application number: 11250090.5
(22) Date of filing: 27.01.2011
(51) Int. Cl.: G06F 21/24

(54) **Document authentication data embedding method and apparatus**

(30) Priority: 28.01.2010 GB 1001416
(71) Applicant: Adsensa Ltd., London EC4A 1PT (GB)
(72) Inventor: Anderson, Martin, London EC4A 1PT (GB); Abernethy, Barrett, London EC4A 1PT (GB)
(74) Representative: Collins, John David

(57) **Abstract**

A method of embedding authentication data in an electronic document image is provided. The method comprises acquiring data related to an item of information on an image of at least one page in the electronic document. The data comprises information describing the content of the item and information indicating a location of the item. The image is decomposed into a hierarchy of images having a top level and one or more lower levels each having a higher level parent, each lower level image defining a smaller region of the corresponding higher level parent image, the top level image defining a region that covers at least the item of information. A first secure identifier of at least the top level image is computed and arranged in a first data arrangement. A second secure identifier of the data related to the item of information is computed and arranged, together with the data related to the item of information, in a second data arrangement. The first and second data arrangements are embedded in the electronic document.

## Description

### FIELD OF THE INVENTION

The invention generally relates to embedding data in electronic documents, in particular for authentication purposes.

### BACKGROUND TO THE INVENTION

Although many industry sectors remain reliant on paper-based records, they are also increasingly implementing computerized processes. In the insurance industry, for example, information is extracted from policy documents and stored as structured data in accordance with standards specified by a standards organization such as ACORD (Association for Cooperative Operations Research and Development). The structured data typically contains information such as the name of the insured, the insurer, the type of risk, the period of cover and the premium to be paid. This data is useful for administrative purposes.

Persons involved in the insurance industry typically want to examine both the structured data and the policy document. Industry practice at present is to send the document as a PDF (Portable Document Format), with the associated structured data in a separate file. These separate items are not always stored and transmitted together and are therefore easily separated. It would therefore be desirable to provide a way of keeping documents and associated data together.

Furthermore, given the relative ease with which digital files can be altered, precise detection of authorised and unauthorised changes is important. This is of particular relevance to sectors such as the insurance industry, which rely on the information contained in the documents. It would therefore also be desirable to safeguard the authenticity of electronic documents and associated data.

### SUMMARY OF THE INVENTION

In accordance with an aspect of the invention there is provided a method of embedding authentication data in an electronic document, the method comprising acquiring data related to an item of information on an image of at least one page in the electronic document, the data comprising information describing the content of the item and information indicating a location of the item; decomposing the image into a hierarchy of images having a top level and one or more lower levels each having a higher level parent, each lower level image defining a smaller region of the corresponding higher level parent image, the top level image defining a region that covers at least the item of information; computing a first secure identifier of at least the top level image; arranging said first secure identifier in a first data arrangement; computing a second secure identifier of the data related to the item of information; arranging said second secure identifier and the data related to the item of information in a second data arrangement; and embedding the first and second data arrangements in the electronic document.

Thus the method provides a document having embedded data that can be used for authentication purposes. In particular, the secure identifier of the decomposed image enables content changes to be detected, while the secure identifier of the related data enables changes made to the associated item of information to be detected. In combination, the first and second data arrangements allow an efficient determination to be made as to whether localized document content has been changed. The top level image can define a region corresponding to substantially the entire image.

In an embodiment, the structure of the first data arrangement provides an association between the first secure identifier and the corresponding image of the hierarchy. In another embodiment, the first data arrangement is labelled to provide an association between the first secure identifier and the corresponding image of the hierarchy. This can be in the form of node identifiers.

In an embodiment, a hierarchical chain defining one or more of the images that overlap the item is determined, and included in the second data arrangement information identifying the image or images in the chain. In an embodiment, the regularity of quadtree structures, for example, allows the chain path to be determined based on knowledge of the last node. This is useful for saving storage space, while still enabling a receiver to determine which images to check.

The information indicating a location of the item can comprise a pair of coordinates defining diagonally opposed corners of a rectangle. This is a convenient structure for bounding items of interest.

The image can be scaled to predetermined size. This means that less information needs to be embedded, as the receiver can use the normalized dimensions as reference dimensions.

As used herein, the phrase "image decomposition", "decomposing an image" and the like, broadly refers to splitting an image (or a portion of an image) into two or more components. Different spatial decomposition techniques can be applied to the image. For example, quadtree image decomposition provides a recursive regularly-defined structure, while *kD*-tree image decomposition generally requires less storage space since each node has only two children. For *kD*-tree image decomposition, the information indicating an orientation and position of corresponding splitting lines of the images can be included in the first data arrangement. It will be appreciated that other spatial decomposition techniques can be implemented, such as those based on binary trees and bounding areas. The binary tree-based technique can be applied to recursively subdivide a page (image) horizontally, so that the final division might just be a couple of lines of text. The bounding area-based technique can be applied to an item of information comprising a paragraph, for example. In such cases, the (or each) paragraph can be initially bounded, followed by the bounding of lines within the paragraph, followed by the bounding of words within lines. Bounding area information can be included in the first data arrangement. Thus, the image can be decomposed in regular ways, in heuristic ways, by area, or in some other way that best fits the image data and any storage requirements.

The secure identifiers can be encrypted by means of an encryption algorithm, for example an asymmetric encryption algorithm that utilises a private key of a public/private key pair to encrypt each of the first secure identifier and the second secure identifier. The public key can be embedded in the document.

In an embodiment, the first and second data arrangements are embedded using the Extensible Metadata Platform (XMP).

The first secure identifier, as well as the second secure identifier, can comprise at least one of a cryptographic hash and a digital signature.

In an embodiment, the image of the hierarchy corresponding to the first secure identifier can be included in the first data structure. The image can be compressed to save space.

In another aspect of the invention there is provided a method of detecting whether a change has been made to at least one page of an electronic document, the method comprising decomposing an image of said at least one page of the electronic document into a hierarchy of images having a top level and one or more lower levels each having a higher level parent, each lower level image defining a smaller region of the corresponding higher level parent image, the top level image defining a region that covers at least the item of information; computing a first secure identifier of at least the top level image; and comparing the computed first secure identifier to a corresponding first secure identifier extracted from the electronic document.

This provides a check of whether a change has been made to the electronic document. Accordingly, if the comparison indicates a difference (i.e. a change), it can be determined whether the information contained in the image has changed. This can be checked by determining one or more images defining regions that correspond substantially to the location of the item, computing the secure identifier of the one or more images, and comparing the secure identifier of the one or more images to the corresponding secure identifier or secure identifiers extracted from a first data arrangement.

A further check to determine whether the data related to the item of information has changed can also be performed, for example by computing a second secure identifier of data related to the item of information, and comparing the computed second secure identifier to a corresponding secure identifier extracted from the document. The association between the first and the second secure identifier being contained in the data from which the second secure identifier is computed.

In another aspect of the invention there is provided a method of tracking changes made to an electronic document by a user, the method comprising receiving an electronic document including embedded data; changing the electronic document; and updating the embedded data in accordance with said changing; wherein said updating comprises one or more of modifying existing data of the embedded data and adding new data to the embedded data.

The modifying may comprise adding a user identifier to the modified data, computing a secure identifier of the user identifier and the modified data, and inserting the computed secure identifier in the embedded data. The adding may comprise adding the user identifier to the new data, computing a secure identifier of the user identifier and the new data, and inserting the computed secure identifier and the new data as part of the embedded data. The user identifier identifiers the user making the change, while the computed secure identifier enables authentication of the change.

The method can further comprise decomposing the image into a hierarchy of images having a top level and one or more lower levels each having a higher level parent, each lower level image defining a smaller region of the corresponding higher level parent image, the top level image defining a region corresponding to substantially the entire image; and determining at least one image corresponding to said changing of the document; wherein updating the embedded data in accordance with said changing comprises inserting said at least one image as part of the embedded data.

In another aspect of the invention there is provided a method of certifying an electronic document, the method comprising receiving an electronic document embedded with a first data arrangement and with a second data arrangement, wherein said first data arrangement comprises a set of first secure identifiers of images of an image hierarchy, said image hierarchy having a top level and one or more lower levels each having a higher level parent, each lower level image defining a smaller region of the corresponding higher level parent image, the top level image defining a region that substantially covers a page of the electronic document including an item of information, and wherein said second data arrangement comprises data related to the item of information and a second secure identifier of the related data, said related data comprising information describing the content and location of said item of information; acquiring data related to a digital stamp applied to said page of the electronic document, the acquired data comprising information describing the content and location of the digital stamp; computing a new first secure identifier of at least one of the images of said image hierarchy corresponding to the location of the digital stamp; computing a second secure identifier of the acquired data; and inserting the computed first secure identifier in said first data arrangement and inserting the computed second secure identifier and said acquired data in said second data arrangement.

In another aspect of the invention there is provided a data processing apparatus for embedding authentication data in an electronic document, comprising data acquisition means configured to acquire data related to an item of information on an image of at least one page of said electronic document, the data comprising information describing the content of the item and information indicating a location of the item; image processing means configured to decompose the image into a hierarchy of images having a top level and one or more lower levels each having a higher level parent, each lower level image defining a smaller region of the corresponding higher level parent image, the top level image defining a region that covers at least the item of information; secure identifier computation means configured to compute a first secure identifier of at least the top level image, and to compute a second secure identifier of the data related to the item of information; data arranging means configured to arrange said first secure identifier in a first data arrangement, and to arrange said second secure identifier and the data related to the item of information in a second data arrangement; and embedding means configured to embed the first and second data arrangements in the electronic document. Also in an embodiment either of the first or the second data arrangement may be embedded in the other data arrangement.

The data arranging means can be further configured to label the first data arrangement to provide an association between the first secure identifier and the corresponding image of the hierarchy.

The image processing means can be further configured to determine a hierarchical chain defining one or more of the images that overlap the item, and wherein the data arranging means can be further configured to include in the second data arrangement information identifying the image or images in the chain.

There can also be provided an image acquisition means configured to scale the size of the image to a predetermined size.

In one embodiment, the image processing means is further configured to decompose the image based on a quadtree image decomposition. Alternatively, the image processing means is further configured to decompose the image based on a *kD*-tree image decomposition. In the case of the *kD*-tree image decomposition, the information associating each first secure identifier to the corresponding image of the hierarchy in a first data arrangement can comprise an orientation and position of corresponding splitting line. Alternatively still, the image processing means can be configured to decompose the image based on binary tree image decomposition and bounding area image decomposition.

There can also be provided encryption means configured to apply an encryption algorithm to each of the first secure identifier and the second secure identifier. For example, the encryption means can be configured to use a private key of a public/private key pair to encrypt the first secure identifier and the second secure identifier.

The embedding means can be further configured to embed the first and second data arrangements using the Extensible Metadata Platform (XMP).

The data arranging means can be further configured to include in the first data arrangement the image of the hierarchy corresponding to the first secure identifier.

The present invention and any of its embodiments can be implemented by software on a general purpose computer or in a combination of software and hardware. Thus any of the `means' defined above can be implemented as code modules in any combination in a computer.

In one embodiment of the invention there is provided a computer program product which may be embodied in a passive storage medium, and which configures a computer to perform a method defined in any one of the paragraphs above. Here, the term computer may encompass a computer with dedicated hardware.

Aspects of the invention may be provided in the form of a computer program product on a carrier medium, which may be embodied in a passive storage medium such as an optical or magnetic medium, or in an electronic medium such as a mass storage device (e.g. a FLASH memory), or in a hardware device implemented to achieve execution of instructions in accordance with the invention, such as ASIC, an FPGA, a DSP or the like. Alternatively the carrier medium can comprise a signal carrying the computer program code such as an optical signal, an electrical signal, an electromagnetic signal, an acoustic signal or a magnetic signal. For example, the signal can comprise a TCP/IP signal carrying the code over the Internet.

### BRIEF DESCRIPTION

Further aspects, features and advantages of the invention will become apparent to the reader of the following description of specific embodiments of the invention, provided by way of example only, with reference to the accompanying drawings, in which:
Figure 1 is a schematic diagram of a data processing apparatus according to an embodiment of the invention;
Figure 2 is a schematic diagram of quadtree image decomposition according to an embodiment of the invention;
Figure 3 is a schematic representation of the quadtree corresponding to Figure 2;
Figure 4 is schematic representation of the structured data embedded in an electronic document according to an embodiment of the invention;
Figure 5 is a flow diagram providing an overview of the operations performed by the apparatus shown in Figure 1; and
Figure 6 is a flow diagram showing the detecting of change to electronic documents according to an embodiment of the invention.

### DETAILED DESCRIPTION

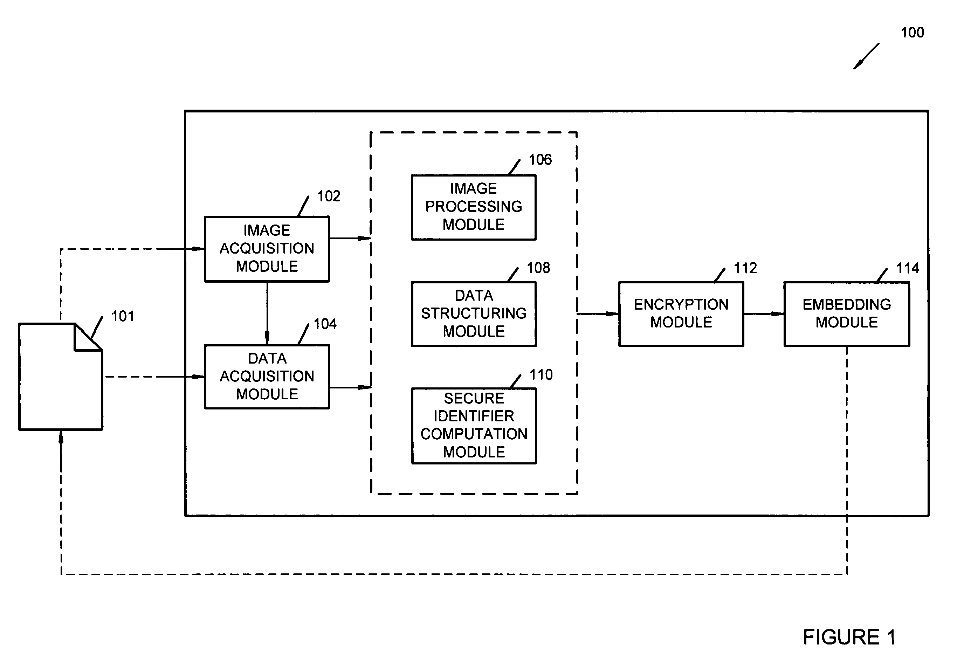

Figure 1 is schematic diagram of a data processing apparatus 100 according to an embodiment of the invention. By way of overview, the apparatus comprises an image acquisition module 102 that acquires (receives or renders), normalizes and outputs an image (or a collection of images) representative of document 101, and a data acquisition module 104 that acquires data related to the document 101, for example by extracting structured data from the document itself, extracting the data manually or automatically from the rendered image, or receiving manually input data. Image processing module 106 applies a "decomposition" process to the image. Secure identifier computation module 110 computes cryptographic hashes of the decomposed image and of the acquired data, which the data structuring module 112 organizes. Encryption module 112 encrypts the data structures, which are then embedded in the electronic document 101 by embedding module 114. The embedding module can also be configured to embed image fragments (compressed or otherwise) along with the secure identifiers. The configuration and operation of each of these modules will now be described in more detail.

### Image acquisition module

A document can exist in either physical or electronic form. Where the document is in physical form it is first transformed into an electronic representation and saved in an internal memory (not shown) or on an external storage device. This can be achieved by scanning the document or any other known image capture technique. For convenience, it is assumed that the document is a Portable Document Format (PDF) file, although it will be apparent that the described technique applies equally to other types of files.

If the PDF is encrypted it is first decrypted. Where the PDF is a "non-image" PDF, it is rendered to an image or collection of images (e.g. one image per page of the document) by image acquisition module 102. Where the PDF is already in an image format, the image acquisition module 102 can scale/adjust it to a normalized format if required. For example, each image can be rendered in monochrome or greyscale, at 300 DPI and a resolution of 2480 x 3508 pixels (A4). For originals that are larger than A4, the scaling may result in some information loss. However, image acquisition is primarily performed to allow efficient computation of secure identifiers (described later), and the resultant image need not be saved or transmitted, though compressed or uncompressed versions of the image or image fragment may be retained as part of an audit trail. It will be appreciated that the image(s) can also be supplied in a suitable format (e.g. already normalized) to the data processing apparatus.

### Data acquisition module

The data acquisition module 104 acquires data related to the document, particularly data related to items of information such as portions of text (e.g. paragraphs, words and letters) and graphical elements contained in the document 101 or the representative image(s). This can be accomplished in a number of ways. For example, the data acquisition module 104 may search for and acquire the items using an optical character recognition (OCR) process that transforms the images into machine readable textual and layout data. Alternatively, the data describing items of information contained in the document may be associated with the document at the time of document creation (e.g. in the form of XMP data), which can be read by data acquisition module 104. Further still, the data acquisition module 104 may simply receive data that has been entered manually by someone reading the document. Other suitable techniques for acquiring such data will be apparent to the skilled person.

Irrespective of how the data is obtained, it may be possible for the data acquisition module 104 to identify which part of the document (page and position) the information item was sourced from. In an embodiment, this information takes the form of a pair of (x, y) coordinates that represent the top-left and bottom-right corners of an axis aligned bounding box (AABB), i.e. a rectangular area formed around the item of information. The coordinates can be determined either as absolute coordinates or as percentages of the page width and height, for example as measured from the top left corner of the page. If the (x, y) coordinates are in the form of absolute coordinates the data acquisition module 104 can scale them in accordance with the scaling ratio (normalization) applied to the page by the image acquisition module 102. Where it is not possible to identify where an item of information is sourced, it can be assumed that it is sourced from the entire document.

### Image processing module

The image processing module 106 decomposes each image into a hierarchy of images. The process is based on the concept of recursively splitting the image into smaller regions according to some criterion until further subdivision is not possible, necessary, or desired. In an embodiment, the image processing module 106 employs a quadtree-based decomposition.

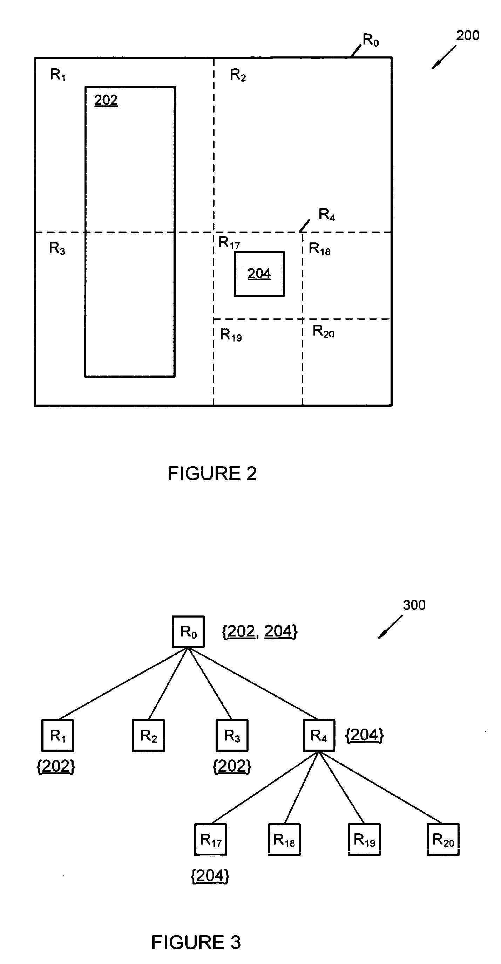

With reference to Figure 2, an image 200 acquired by image acquisition module 102 contains two items of information 202, 204. These items are not necessarily the only items contained on this page of the document (image), merely the ones that are of interest. In this case, the recursive decomposition is performed by splitting image region Rₒ (corresponding to substantially an entire page of document 101) into four equal-sized subregions: R₁, R₂, R₃, and R₄. Subregion R₄ is shown split into four equal-sized subregions (R₁₇, R₁₈, R₁₉, and R₂₀). It will be appreciated that any of the subregions depicted in Figure 2 can be further subdivided into subregions, though this is not shown for reasons of clarity. Thus, subregions R₅ to R₁₆ (and corresponding nodes) are not shown. However, the general principle can be ascertained. The image decomposition can be terminated when a threshold is reached (e.g. when a subregion reaches a certain minimum size), when a region contains only image information of a single colour (i.e. no further gains will be achieved by further decomposition), or when a region contains no portion of an item of interest.

The quadtree structure corresponding to the decomposition of image 200 is shown in Figure 3. Rectangular data, such as items 202, 204, can be associated with each quadtree node corresponding to an image region that overlaps the item. The association can be determined by also defining each image region as a pair of (x, y) coordinates of an AABB. Thus, item 202 is associated with the node of image regions Rₒ, R₁ and R₃, while item 204 is associated with the node of image regions Rₒ, R₄ and R₁₇. Alternatively, each item can be associated with the node corresponding to the smallest image region which contains it in its entirety.

It is noted that a tree of depth '0', corresponding to the page as a whole, is perfectly valid for present purposes. Trees of depth>4 use substantial amounts of storage space and provide very little additional benefit and so are generally avoided.

### Secure identifier computation module

Subsequent to image decomposition, a secure identifier of one or more hierarchical images regions is computed by moduie 110. The module 110 also computes a secure identifier of the data acquired by the data acquisition module 104. These are used to track future (un)authorized changes to the document 101, as will be described later. Broadly speaking, the secure identifier is a unique 'code' that can be used to identify the original image and related data. In an embodiment, the secure identifier comprises a hash, though it will be apparent that the secure identifier could also be a digital signature or any other cryptographic representation of the original image and acquired data.

A hash function is a mathematical function that takes a variable-length input and converts it to a fixed-length output called the 'hash value' or 'hash'. Cryptographic hash functions are designed to be "one way". This means that they are easy to compute but computationally infeasible to invert. They are also designed such that it is computationally infeasible to find two inputs that hash to the same output ("collision resistance"). Typically, it is not possible to determine specifically which part of the input has been changed, only that something in the input has changed. Standard examples of hash functions are Message Digest 5 (MD5) and Secure Hash Algorithm 1 (SHA-1).

Cryptographic hashes are sensitive to every bit of the input. This means that the input integrity can be validated only when every bit of the input is unchanged. Such bit-by-bit verification is not always desirable for images that may undergo various types of processing which can introduce 'noise'. So-called perceptual hashes have been designed to produce the same hash value as long as the input has not been perceptually modified. However, in an embodiment the secure identifier computation module applies a cryptographic hash function rather than a perceptual hash function to the image to permit seemingly insignificant changes to be detected. For example, this can include the insertion or deletion of numbers, commas and other letters or characters consisting of few pixels.

Generally, for purposes of authentication, a hash can be computed as a function of the input information (known as Manipulation Detection Codes or MDCs) and then encrypted, or as a combination of the input information and a shared secret key (known as Message Authentication Codes or MACs).

In an embodiment, module 110 calculates a secure identifier (e.g. a cryptographic hash) of at least the image region corresponding to the root of the hierarchy based on an MDC hash function. Alternatively, the secure identifier can be calculated for each image region. Thus, with reference to Figures 2 and 3, a secure identifier can be calculated for each of Ro, R₁, R₂, R₃, R₄, R₁₇, R₁₈, R₁₉, and R₂₀. This is advantageous because even though region R₁₈ for example, contains no item of information (or at least no item that is deemed to be of interest), any change to that region may impact on how items 202, 204 are interpreted.

The secure identifier computation module 110 also calculates a cryptographic hash of the data acquired by data acquisition module 104. In an embodiment, the data corresponding to each item 202, 204 is hashed separately.

### Data structuring module

The data structuring module 108 takes the hash values of the hierarchical image(s), as well as the data related to the document and the hash value thereof, and arranges them using a system of metatags. In an embodiment, the data is recorded in XML and compressed to minimise the amount of storage required. Whatever form it is stored in, it should be possible to unpack and rearrange it in a form that is compatible with a document reader application.

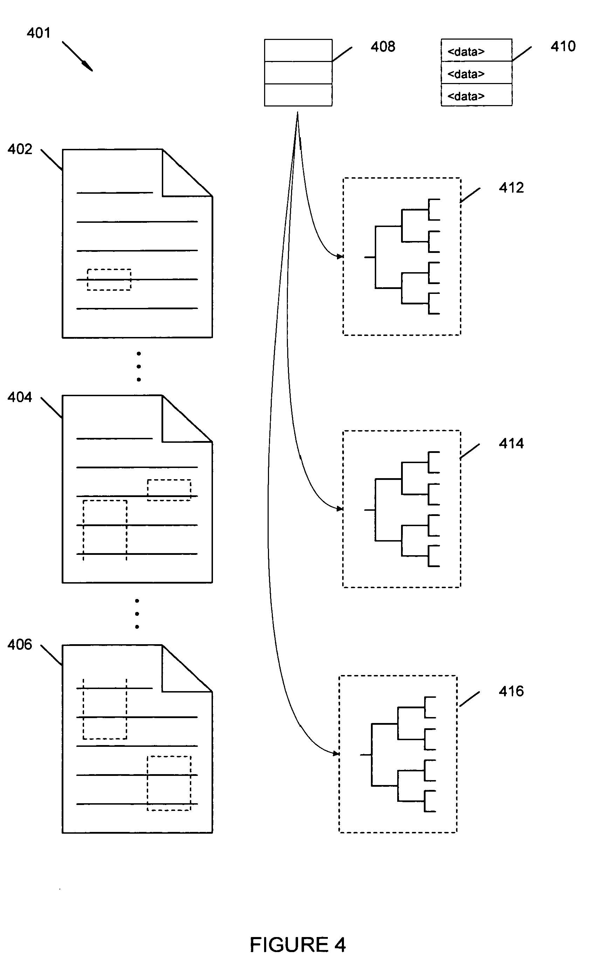

A document change map, which is a master data structure from which everything else can be referenced, contains a list of links to two types of tables: a page table and a data extraction table. These are depicted conceptually in Figure 4, in the context of a document 401 comprised of three pages 402, 404, 406.

Page table 408 contains links to the image hashes of each page. Data extraction table 410 stores the acquired data together with the location information of the items, which includes the page(s) and position(s) from where they were obtained (an item may appear at multiple locations and on multiple pages).

In an embodiment, the image hashes of each page are mapped to hierarchical images of the quadtree (shown in Figure 3). This will be referred to as a 'quadtree image hash map' or simply 'hash map' 412, 414, 416. Each existing node of the quadtree image hash map stores the hash value of the corresponding image region. The quadtree structure itself can provide information about the hierarchical relationships. However, often there is no guarantee that embedded data structures will retain their 'shape'. In one embodiment, each node stores information associating a hash value to an image region. For example, the hash corresponding to image region R₃ would be allocated the number "3". The depth of the tree is indicated by a header. The top level node contains the hash of the entire image (document page).

A node may also store the (x, y) coordinates of the AABB that bounds the corresponding image region. It will be appreciated that because the pages (images) are scaled to a common size by the image acquisition module 102, the AABB splits should be constant, and so it is not essential to store the coordinates. However, this can be advantageous in case future revisions use different, or page specific, page sizes, or different subdivision types or bounding types.

A node may also store pointers to its four child nodes, for example in the order of top left, top right, bottom left and bottom right subregions. However, as the pointers to the child nodes can be of a similar size order as the hash, the data structuring module 108 can instead construct a binary map that indicates which nodes do exist, and rely on the regularity of the quadtree structure to enable determination of the children.

Once the quadtree image hash maps have been constructed for each page, the data structuring module 106 can determine the traversal path needed to describe where the item came from. The traversal path information can be appended to the data describing each item in the data extraction table, in the form of a list of nodes, so that a receiver can later identify which hashes to check in order to ensure that no changes to the underlying image region(s) which supplied the data has occurred.

The data extraction table 410 is now described. Recall that extracted data can be sourced or constructed from one or many locations spanning the entire document. The locations are stored in the following format:
Number of Pages<Original Location(s), Mapped Location(s)>

The 'Original Location' entry comprises the elements:
Page Number, Page Size X, Page Size Y, Number of Bounding Boxes,<Min Corner, Max Corner>.

The corners are the uncorrected or original co-ordinates of the bounding boxes surrounding the original capture regions. They may be stored as absolute values or as percentages of page width and measured from the top left hand corner of the page.

The Mapped Locations entry comprises the elements:
Page Number, Number of tree chains,<tree chain>.

The tree chain is a traversal list that describes all the image regions that the rescaled bounding box of the item of information passes over. The tree chain is represented in the following format:
Number of entries<nodes>.

The <nodes> entry is a list of all the populated chain nodes which contains layer number and node number. Data can be contained in any node. Furthermore, nodes are also leaves, i.e. they both contain data and links to other nodes. Based on the regular quadtree structure, the higher level nodes can be determined from this list. For example, in Figure 3, a traversal path for item 204 is Rₒ-R₄-R₁₇. Node R₁₇ is the thirteenth node of layer two and the eighteenth node overall (the twelve child nodes of R_{1,} R₂, and R₃ not being shown).

A secure hash of the data contents is created and stored, and can be used to track future unauthorized changes to the data. This is described in more detail later.

### Encryption module

Encryption schemes can broadly be classed into symmetric encryption schemes and asymmetric encryption schemes. In symmetric encryption, the same key (the secret key) is used to encrypt and decrypt messages. Triple-DES cryptography is an example of symmetric cryptography. In asymmetric encryption, two different keys (a keypair) are used: a private key and a public key. The user keeps the private key secret and typically uses it to digitally sign data, or to decrypt data that has been encrypted with the complementary public key. An example of an asymmetric encryption scheme is Rivest-Shamir-Adleman (RSA).

In an embodiment, the encryption module 112 signs the hash value(s) using a private key of an asymmetric encryption key-pair. The public key is embedded in the document and can be used to verify the digital signature. In another embodiment, the encryption module 112 encrypts the entire data structure.

### Embedding module

The embedding module 114 takes the structured data (document change map, page table and data extraction table) and embeds it in the document in such a way that the embedded data structure does not interfere with the normal use of the electronic document. This means that it is possible to protect and transmit the document in the same manner as if it contained no embedded structured data.

In order to insert the data structures into the original electronic document, the embedding module 114 determines the original document type, e.g. PDF, and compares it to a list of compatible types. If the original type is compatible then the embedding module can proceed to the next step of the process. However, if the document is not compatible, the embedding module 114 can convert the original document to a compatible format whilst preserving the original content and layout. Once the document is in a compatible format, the structured data is inserted in such a way that it does not interfere with the normal operations on the document such as reading, writing and printing. The structured data is easily readable by an application enabled to do so or by a plugin for the application associated with the original document type.

The structured data can be inserted so that it is not part of the visible data contained in the document, and only identifiable using a special tag, and the object added to the PDF object data index. The data structures may need to be modified or updated due to changes in the original document or errors which occurred during the initial data embedding phase. For example, whenever a document is opened by an application or plugin that is able to read the data it compares the last update time of the original document against the data embedding date. If these do not match the data embedding process may need to be performed again.

In an embodiment, the structured data is embedded using the Extensible Metadata Platform (XMP) from Adobe Systems. XMP metadata can be embedded in a variety of file formats, including PDF, TIFF and JPEG. The XMP Packet format specifies how XMP metadata is embedded in such files. XMP packets are XML documents using RDF constructs to encode metadata. An advantage of using XMP is that it is, by definition, extensible, which means that it is also possible to define a custom schema (set of properties and their defined meanings, such as the type of value) for storing the structured data described herein. An XMP Schema is identified by a namespace URI (Universal Resource Identifier), which can be selected accordingly.

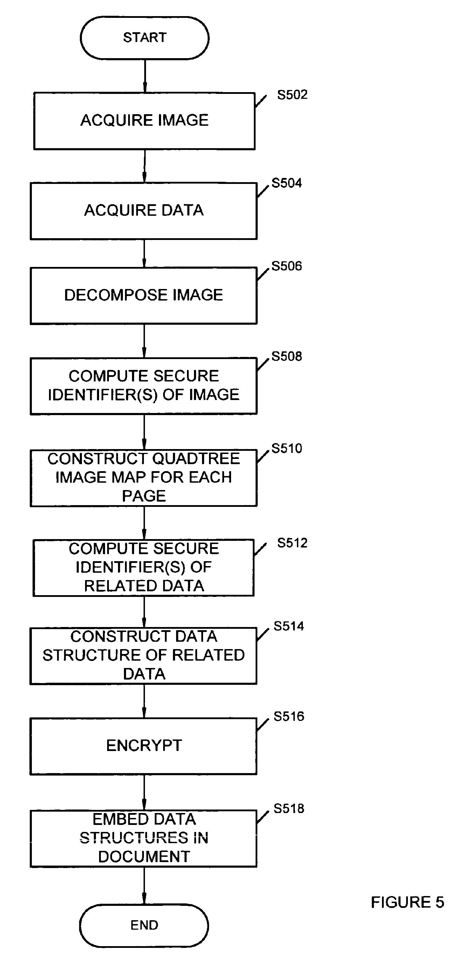

By way of summary, Figure 5 is a flow diagram providing an overview of the operations performed by the modules of the apparatus shown in Figure 1. At steps S502 and S504, the image and data are acquired respectively. It will be recalled that the data can be acquired from the image, though this need not be the case. At step S506, a recursive decomposition of the image is performed, for example by means of a quadtree decomposition technique. Next, at step S508, the hash values of the hierarchical images are computed. The computed hash values, together with information indicating the corresponding image regions, are then arranged at step S510. At step S512 the hash value of the data related to the item is computed, and arranged at step S514. At step S516 the data structures are encrypted, ready for embedding in the document at step S518. The document can then be transmitted to an intended recipient.

In another embodiment, image fragments of the decomposed image are also embedded in the document at step S518. The image fragments can be compressed to reduce the storage requirements.

### Receiver-side processing

The receiver-side data processing apparatus comprises modules that are generally similar to those of data processing apparatus 100 shown in Figure 1. For example, the receiver-side data and image acquisition modules are configured to extract the data structures that have been embedded in the document by the originator, and acquire and decompose an image of the document, respectively. Similarly, the secure identifier computation module is configured to compute the hash values of the image and/or the related data, while the encrypted module can also be configured for decryption. It will thus be appreciated that apparatus 100 can equally function as a document authentication apparatus, though some of the data flows may differ. The processes described below can therefore also be implemented by data processing apparatus 100.

### Data extraction

Once data has been embedded into a document using XMP, it is a relatively straightforward exercise to detect and extract the data. The entire structured data or chain of data can be extracted and saved in a variety of formats appropriate to structured data such as a spreadsheet. A form of query language can be executed on the data in XML format. More specifically, the document is opened by the structured data reader and the data is then read until a structured data object is found along with any subsequent data objects which were linked to it. All this data is joined together and then either written out to a file in a suitable format or a query performed on it (in the case of XML data this may be an XPath query) and then routed accordingly.

### Detecting changes in document pages

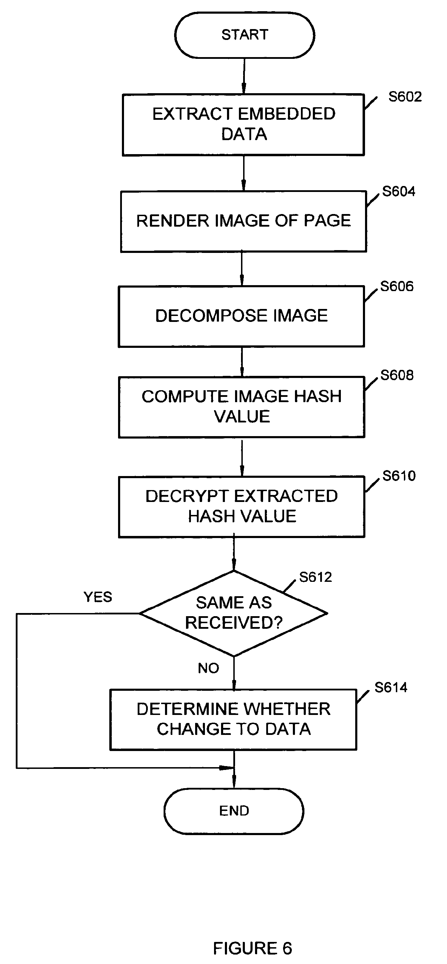

With reference to Figure 6, once it has been determined that a received PDF contains embedded data, the receiver extracts the data (step S602), renders an image of each page of the document (step S604), decomposes each image into a hierarchical (quadtree) representation (step S606), and computes the hash value of one or more of the hierarchical images (step S608), for example the root image (the whole page). The receiver then decrypts the corresponding extracted hash value(s) (step S610) and compares the computed hash value to the extracted, decrypted hash value. If there is agreement (step S612 'YES'), the document page (but not necessarily the related data) is accepted as being both authentic and having integrity, since only the actual originator could encrypt the hash value correctly.

If a change to the document page is detected (i.e. if the hash values differ; step S612 'NO') it then needs to be determined whether an altered area has directly impacted on an item of information on the page and/or on the related data (step S614).

In an embodiment, in order to determine whether an altered area has directly impacted on the item of information on the page the traversal list, <tree chain>, is used. This list describes all the image regions that the rescaled bounding box of the item passes over. Thus, the hash values for each of these image regions can be computed and compared to the corresponding received hash values. This can be useful for items of information that span many image regions. Furthermore, the location information of the item (coordinates of the AABB) can be compared to image region information (also coordinates of the AABB) to pinpoint a particular image region, e.g. the smallest image region that contains the item of information in its entirety. This can be useful for identifying whether changes have been made to smaller sized items of information.
In another embodiment, the hash value of the image at the root of the hierarchy is computed and compared to the corresponding received hash value. These will be different if a change has been made to the document. Each hash value corresponding to the images of the next lower level of the hierarchy is then computed and compared to the corresponding received hash value (provided, of course, that these are available). This process can be iteratively repeated whenever a computed hash differs from the corresponding received hash, until the lowest level of the hierarchy is reached. The location information of image regions corresponding to the computed hash values that differ from the received hash can be compared to the location information of the item. If there is a correlation, the item of information has changed.

In one embodiment, the electronic document does not contain the actual image fragments. However, in another embodiment, where some or all of the (compressed or uncompressed) image fragments are embedded in the electronic document, it will be possible to compare not only the extracted and computed hash values, but also to compare the extracted and generated image fragments. This can be useful for audit trail purposes.

If a change has been made to an image region but it does not directly affect a region containing captured information, this implies that content has been added or removed that is not directly related to that region but may directly or indirectly change the meaning/context of the captured information.

### Detecting changes in the related data

In order to detect a change in data related to the document the most recent secure hash value of the related data is compared with a previous hash value. If the independently computed and received hash values do not match or the received hash value is invalid there has been a modification to the related data. An invalid hash value may indicate an unauthorized change to the acquired data.

If there has been a change in the data a check is performed to determine if it is purely a change to the acquired data or it is as a result of a change in the images. In an embodiment, this is performed using the traversal list as has been described in the previous section. If comparable hash values differ, the data has changed due to an image change, which can be verified by means of the extracted image fragments (if available). Otherwise there has been an embedded data update with no change to the underlying image.

### Updates to the document

Users may want to update the contents of the document. Once a change to the document is made an update to the embedded structured data is required. An update can comprise constructing new data arrangements from 'scratch' (a 'full' update) or simply adding entries to already existing data arrangements (a 'delta' update). In both cases, new hash value entries need to be computed and stored. The choice to perform a delta update or a full update can be determined by software or the user. The advantages of a delta offset, in terms of saving storage space, are offset by an increase in processing time in later operations.

An update can also include storing original data and original image fragments, as the case may be, together with updated versions of the data and image fragments. By not replacing older versions of the data and image fragments, a full audit trail can be produced.

An update begins with a new entry being made in the document change list, comprising a flag indicating if the update is a delta on a previous state or a full update. In both cases the image hashes are computed in the same way as described above, as well as a list of where the extracted data elements occurred. For full updates, the quadtree and the lists are added as normal and update the page change list with the new link. New secure hashes are calculated for every data entry.

If a delta update is required then calculate the changes from the previous data set or, in the case of a chain of delta updates, calculate a change from the cumulative changes since the last full update. The delta of the image hashes and data is stored in the same way as described previously and the document is updated with change links to point to them.

To ensure that the most recent data is written out or queried when extracted, the page change table is searched for the most recent full update. If there have been any delta updates since the full update these can identified as well. The final data set can be compared to the image hash maps to check that there are no unresolved changes in the document, as has been described previously. If there are any un-reconciled changes, the user can be informed.

Data can be also removed from the document, and the structured data restructured, so that all traces are removed, or to consolidate changes made to a document or its data. For example, assuming there is information in a PDF that is to be deleted. The item in the PDF can be identified based on its metatag. Once found it can either be marked as unused in the object index in the PDF where it will be cleaned up when resaved, or it can be removed entirely and the PDF re-indexed to show no trace of the data. The deletion of data should be strictly controlled in certain cases.

Thus, the updating of a document can include adding, replacing, modifying and deleting of data and image fragments.

### Certifying and Verifying changes to the captured data

In an embodiment, every element of the acquired data has a hash calculated for it when it is added to or updated. Also included in the hash are a company and/or user identifier, and a time stamp. This records when, where and by whom the update was performed. If storage space is a limitation or the document is large it may not be practical to compute hashes for every element. In this case hashes of sets of data or the entire data set may be computed. However, this saves space at the expense of fine-grained change detection.

The additional company, user and time stamp information can also be associated to the root node of the image hash quadtree.

It will be appreciated that in order to reconcile outstanding updates the correct credentials must be loaded. Access to and use of these credentials must be tightly controlled in order to offer a reasonable amount of assurance that a committed change was authorized.

Due to the nature of the image hashing it is still possible to detect a change, that while correctly stamped may not have been authorized, even if the correct credentials were applied. In other words if a user makes a change to the captured data without there being a change in the underlying image data and then certifies the change, it is still possible at a later stage to determine that a change has been made to the data without a corresponding change in the image. This change may have been valid due to miss-capture of the data or by some attempt to perform an unauthorised modification. In either case, an audit trail will exist which can be checked.

### Image stamp certification

A document may be certified by electronically applying an encoded stamp to the image. Data associated with this stamp is added to the captured data region. This stamp is actually visible on the document and would appear in the normal document reader for the document type. However, if opened with an application capable of reading the captured data, it can display the data associated with the stamp. This stamp can include, amongst other things: signatures, company logos, document identifier stamps and confidentiality stamps.

Once the image has been modified to include the stamp and the data regions modified the change to the document is certified as described in the above section. This ensures the stamp becomes an integral part of the document as is not easily removed or modified without leaving an audit trail.

Although the invention is described in the context of MD5 and SHA-1, it will be evident that these can be easily replaced when new, possibly more secure or more efficient, hash functions are designed.

Although the image processing has been described in the context of a quadtree decomposition, it will be apparent that other image decomposition techniques are contemplated. These include the *k*D-tree representation. In a *k*D-tree representation, where k refers to the dimension of the space (for present purposes a two-dimensional *k*D-tree is appropriate), each tree node defines an axis-aligned rectangular region of the image, with the root of the tree representing the entire image. Each (non-leaf) node has two descendents which represent two (not necessarily equal) rectangular subregions within the parent region. The split position/dimension can be based on the image data. For a *k*D-tree representation, the receiver cannot necessary rely on the symmetric splitting of the image regions. Thus, in such cases, the data structure will store information describing the split of each hierarchical image.

Although the ordering of nodes and regions has been described in the context of a tree structure in which nodes are numbered from left to right and top to bottom, other methods of numbering or tagging are contemplated, such as a raw dump in order with NULL's for empty nodes. Provided that the node hierarchy can be ascertained, the exact manner by which this is achieved can be varied.

Accordingly, the manner by which a secure identifier of an image is associated with the corresponding image is not limited to allocating a node number to the secure identifier. Thus the particular form of identification can be varied, and may reside in the structure of the data arrangement itself.

Although the data structuring module can construct a binary map in order to indicate which nodes do exist, other types of 'maps' or information can be employed to describe the existence of nodes, such as tables or lists.

It will be understood that the specific apparatus structures and order of steps shown in the Figures and described are exemplary only, and may be rearranged or omitted.

While various embodiments have been described, those skilled in the art will recognize that numerous modifications and variations can be made. Thus the present invention should not be limited by any of the above-described example embodiments, but should be defined only in accordance with the following claims.

## Claims

1. A method of embedding authentication data in an electronic document, the method comprising:
acquiring data related to an item of information on an image of at least one page in the electronic document, the data comprising information describing the content of the item and information indicating a location of the item;
decomposing the image into a hierarchy of images having a top level and one or more lower levels each having a higher level parent, each lower level image defining a smaller region of the corresponding higher level parent image, the top level image defining a region that covers at least the item of information;
computing a first secure identifier of at least the top level image;
arranging said first secure identifier in a first data arrangement;
computing a second secure identifier of the data related to the item of information;
arranging said second secure identifier and the data related to the item of information in a second data arrangement; and
embedding the first and second data arrangements in the electronic document.

2. A method according to claim 1, wherein the structure of said first data arrangement provides an association between said first secure identifier and the corresponding image of the hierarchy.

3. A method according to claim 1 or claim 2, further comprising labelling the first data arrangement to provide an association between said first secure identifier and the corresponding image of the hierarchy.

4. A method according to any one of the preceding claims, further comprising determining a hierarchical chain defining one or more said images that overlap the item, and including in the second data arrangement information identifying the image or images in the chain.

5. A method according to any one of the preceding claims, further comprising including in the first data arrangement the image of the hierarchy corresponding to said first secure identifier.

6. A method of detecting whether a change has been made to at least one page of an electronic document, the method comprising:
decomposing an image of said at least one page of the electronic document into a hierarchy of images having a top level and one or more lower levels each having a higher level parent, each lower level image defining a smaller region of the corresponding higher level parent image, the top level image defining a region that covers at least the item of information;
computing a first secure identifier of at least the top level image; and
comparing the computed first secure identifier to a corresponding first secure identifier extracted from the electronic document.

7. A method according to claim 6, wherein, if the comparison indicates a difference, determining whether the content of an item of information contained in the image has changed, for example wherein determining whether the content of an item of information has changed comprises: determining one or more images defining regions that correspond substantially to the location of the item; computing the secure identifier of the one or more images; and comparing said secure identifier of the one or more images to the corresponding secure identifier or secure identifiers extracted from a first data arrangement.

8. A method according to claim 6 or claim 7, wherein if the comparison indicates a difference, determining whether data related to the item of information has changed, for example wherein determining whether data related to the item of information has changed comprises: computing a second secure identifier of data related to the item of information; and comparing the computed second secure identifier to a corresponding secure identifier extracted from the document.

9. A method of tracking changes made to an electronic document by a user, the method comprising:
receiving an electronic document including embedded data;
changing the electronic document; and
updating the embedded data in accordance with said changing;
wherein said updating comprises one or more of modifying existing data of the embedded data and adding new data to the embedded data.

10. A method according to claim 9, wherein said modifying comprises adding a user identifier to the modified data, computing a secure identifier of the user identifier and the modified data, and inserting the computed secure identifier in the embedded data.

11. A method according to claim 9, wherein said adding new data comprises adding the user identifier to the new data, computing a secure identifier of the user identifier and the new data, and inserting the computed secure identifier and the new data as part of the embedded data.

12. A method according to any one of claims 9 to 11, further comprising:
decomposing the image into a hierarchy of images having a top level and one or more lower levels each having a higher level parent, each lower level image defining a smaller region of the corresponding higher level parent image, the top level image defining a region corresponding to substantially the entire image; and
determining at least one image corresponding to said changing of the document;
wherein updating the embedded data in accordance with said changing comprises inserting said at least one image as part of the embedded data.

13. A method of certifying an electronic document, the method comprising:
receiving an electronic document embedded with a first data arrangement and with a second data arrangement,
wherein said first data arrangement comprises a set of first secure identifiers of images of an image hierarchy, said image hierarchy having a top level and one or more lower levels each having a higher level parent, each lower level image defining a smaller region of the corresponding higher level parent image, the top level image defining a region that substantially covers a page of the electronic document including an item of information, and
wherein said second data arrangement comprises data related to the item of information and a second secure identifier of the related data, said related data comprising information describing the content and location of said item of information;
acquiring data related to a digital stamp applied to said page of the electronic document, the acquired data comprising information describing the content and location of the digital stamp;
computing a new first secure identifier of at least one of the images of said image hierarchy corresponding to the location of the digital stamp;
computing a second secure identifier of the acquired data; and
inserting the computed first secure identifier in said first data arrangement and inserting the computed second secure identifier and said acquired data in said second data arrangement.

14. A data processing apparatus configured to perform the method of any one of claims 1 to 13.

15. A data processing apparatus for embedding authentication data in an electronic document, comprising:
means for acquiring data related to an item of information on an image of at least one page of said electronic document, the data comprising information describing the content of the item and information indicating a location of the item;
means for decomposing the image into a hierarchy of images having a top level and one or more lower levels each having a higher level parent, each lower level image defining a smaller region of the corresponding higher level parent image, the top level image defining a region that covers at least the item of information;
means for computing a first secure identifier of at least the top level image, and to compute a second secure identifier of the data related to the item of information;
means for arranging said first secure identifier in a first data arrangement, and to arrange said second secure identifier and the data related to the item of information in a second data arrangement; and
means for embedding the first and second data arrangements in the electronic document.

16. A carrier medium carrying computer readable code for controlling a computer to carry out the method of any one of claims 1 to 13.
